# EUROPEAN PATENT SPECIFICATION

(11) **EP 1 557 674 B1**
(45) Date of publication and mention of the grant of the patent: **01.10.2014**
(21) Application number: 05000592.5
(22) Date of filing: 13.01.2005
(51) Int. Cl.: G01N 35/10

(54) **Analyzer and analyzing method using disposable tips**
Analysegerät und Analyseverfahren mit Einwegpipettenspitzen
Analyseur et procede d'analyse avec des embouts jetables

(30) Priority: 15.01.2004 JP 2004008328
(43) Date of publication of application: 27.07.2005
(73) Proprietor: SYSMEX CORPORATION, Kobe-shi, Hyogo 651-0073 (JP)
(72) Inventor: Inoue, Hisaaki, Himeji-shi Hyogo 570-0874 (JP)
(74) Representative: HOFFMANN EITLE

(56) References cited:
- WO-A2-00/08472
- JP-A- H11 281 654
- US-A- 5 443 791

## Description

### FIELD OF THE INVENTION

The present invention relates to an analyzer, and specifically relates to an analyzer provided with a dispensing unit for dispensing liquid and having a detachably installed dispensing tip.

### BACKGROUND

Conventional devices are known which include a dispensing unit (syringe) provided with a detachably installed dispensing tip for suctioning and discharging a predetermined liquid (for example, Japanese Laid-Open Patent Publication No. 2001-59848). In the device disclosed in Japanese Laid-Open Patent Publication No. 2001-59848, whether or not the dispensing tip is installed or detached at the tip installation position and tip disposal position is detected by providing sensors for detecting the presence/absence of the tip.

In the device disclosed in Japanese Laid-Open Patent Publication No. 2001-59848, however, when the tip is removed from the syringe, such as when the syringe is transported or when liquid is dispensed after the tip has once been installed to the syringe, it is not possible to detect that the tip has been removed. When dispensation is performed when the tip has been removed from the syringe (dispensing means), it is impossible to dispense a reliable quantity of liquid, with the result that the analysis result may be adversely affected.

Further relevant background art includes WO 00/08472 A2.

### SUMMARY

The scope of the present invention is defined solely by the appended claims, and is not affected to any degree by the statements within this summary.

An object of the present invention is to provide an analyzer and analyzing method capable of reliably monitoring the state of installation of the dispensing tip.

A first aspect of the present invention is an analyzer including a dispensing unit for dispensing a liquid and having a detachably installed dispensing tip, a transfer unit for transferring the dispensing unit, a capacitance sensor connected to the dispensing unit for outputting signals based on capacitance, and a controller configured to control the transfer unit; wherein the controller is configured to determine whether or not a dispensing tip is installed to the dispensing unit based on the output signal from the capacitance sensor.

A second aspect of the present invention is an analyzing method including an installation step of installing a dispensing tip to a dispensing unit for dispensing a liquid, a transfer step for moving the dispensing unit to a predetermined position, a monitoring step for monitoring whether or not a dispensing tip is installed to the dispensing unit based on the output signal from a capacitance sensor connected to the dispensing unit, and a removing step for removing the dispensing tip from the dispensing unit; wherein monitoring whether or not a dispensing tip is installed to the dispensing unit is executed during the execution of the transfer step.

### BRIEF DESCRIPTION OF THE DRAWINGS

For a better understanding of the present invention, and to show how the same may be carried into effect, reference will now be made, by way of example only, to the following drawings, in which:
Fig. 1 is a perspective view showing the overall structure of and embodiment of the analyzer (gene amplification detecting device) of the present invention;
Fig. 2 is a perspective view showing the overall structure of the assay unit of the analyzer of the embodiment shown in Fig. 1;
Fig. 3 is a brief plane view of the assay unit of the analyzer of the embodiment shown in Fig. 2;
Fig. 4 briefly shows the structure of the syringe unit used in the embodiment of the analyzer shown in Fig. 2;
Fig. 5 is a cross-sectional view showing the structure of the pipette tip used in the embodiment of the analyzer shown in Fig. 2;
Fig. 6 is a perspective view storage state of the rack accommodating the pipette tips used in the embodiment of the analyzer shown in Fig. 2;
Fig. 7 is a circuit diagram showing the internal structure of the controller and the electrostatic capacitance sensor of the embodiment of the analyzer of Fig. 2; and
Fig. 8 is a graph explaining the method by which the controller judges whether or not a predetermined amount of reagent is present in the embodiment of the analyzer shown in Fig. 7.

### DETAILED DESCRIPTION OF THE PREFERRED EMBODIMENTS

The preferred embodiment of the present invention is described hereinafter with reference to the drawings.

The present embodiment is described in terms of a gene amplification detecting device as an example of the analyzer of the present invention. The gene amplification detecting device of the embodiment is an analyzer which supports cancer metastasis diagnosis in tissue excised in cancer surgery, by amplifying cancer-derived nucleic acids (mRNA) present within the excised tissue using the LAMP (loop-mediated isothermal amplification) method, and detecting the mRNA by measuring the turbidity of the liquid produced in conjunction with the amplification. Details of the LAMP method are disclosed in US Patent Publication No. 6,410,278.

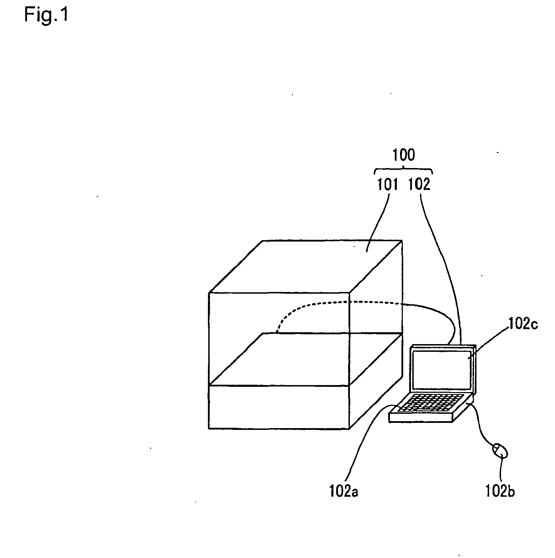

The overall structure of the gene amplification detecting device and data processing part are described below with reference to Fig. 1. The gene amplification detecting device 100 includes an assay part 101, and data processing part 102 connected to the assay part 101 through a communication line, as shown in Fig. 1. The data processing part 102 is a personal computer which includes a keyboard 102a, mouse 102b, and display 102c.

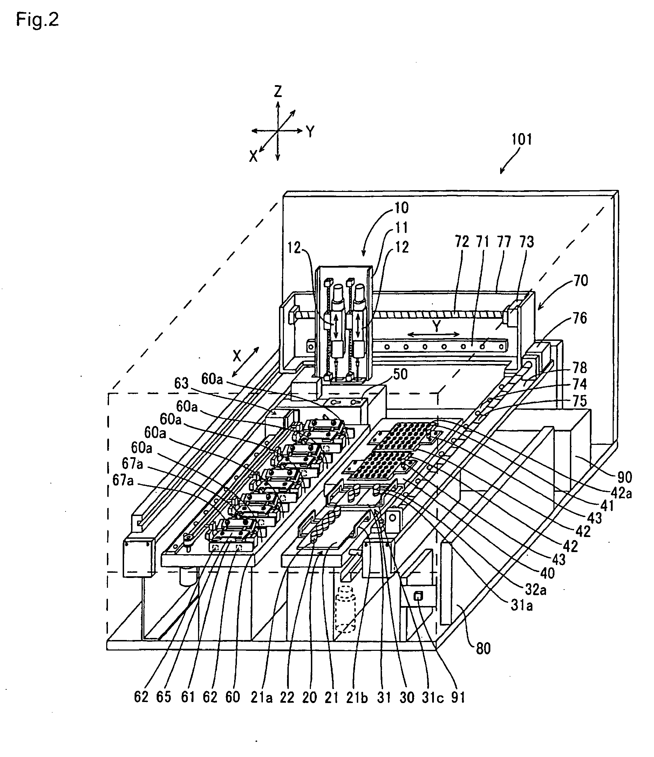

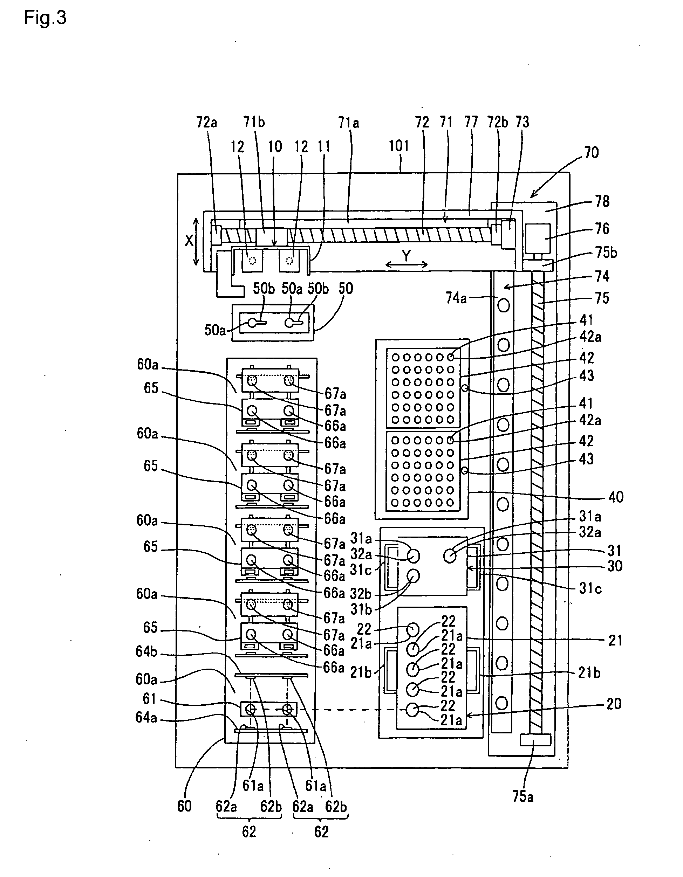

The assay unit 101 includes a dispensing mechanism 10, sample container holder 20, reagent container holder 30, tip holder 40, tip disposal part 50, reaction detecting part 60 incorporating five reaction detecting block 60a, and transfer unit 70 for moving the dispensing mechanism 10 in X- and Y-axis directions, as shown in Figs. 2 and 3. A control circuit board 80 and power unit 90 for supplying electrical power to the entire apparatus including the control circuit board 80 are built into the assay unit 101, as shown in Fig. 2. The control circuit board 80 controls the operation of the various parts of the assay unit 101, and controls the input and output from/to external devices. Furthermore, an emergency stop switch 91 is provided at a predetermined location on the front of the assay unit 101.

The dispensing mechanism 10 includes an arm 11 which is moved in the X-axis direction and Y-axis direction (horizontal directions) by the transfer unit 70, and two syringe units 12 capable of independently moving in the Z-axis direction (vertical direction) against the arm 11. The syringe units 12 include a nozzle 12a on the tip of which is detachably mounted a pipette tip (dispensing tip) 41 described later, pump 12b for suctioning and discharging, motor 12c as a drive source for the pump 12b, and a pressure sensor 12e. In the pump 12b, a suction function and a discharge function are obtained by converting the rotation of the motor 12c to a piston movement. Furthermore, the pressure sensor 12e detects the pressure during suction and discharge by the pump 12b. The dispensing mechanism 10 is connected to an electrostatic capacitance sensor 12d through a lead wire 12f. Whether or not suction and discharge are reliably performed can be detected by the electrostatic capacitance sensor 12d and the pressure sensor 12e.

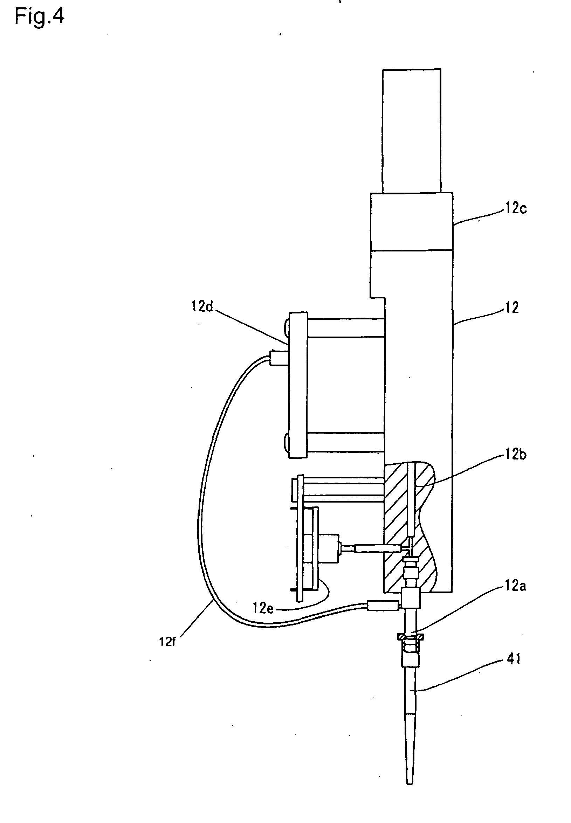

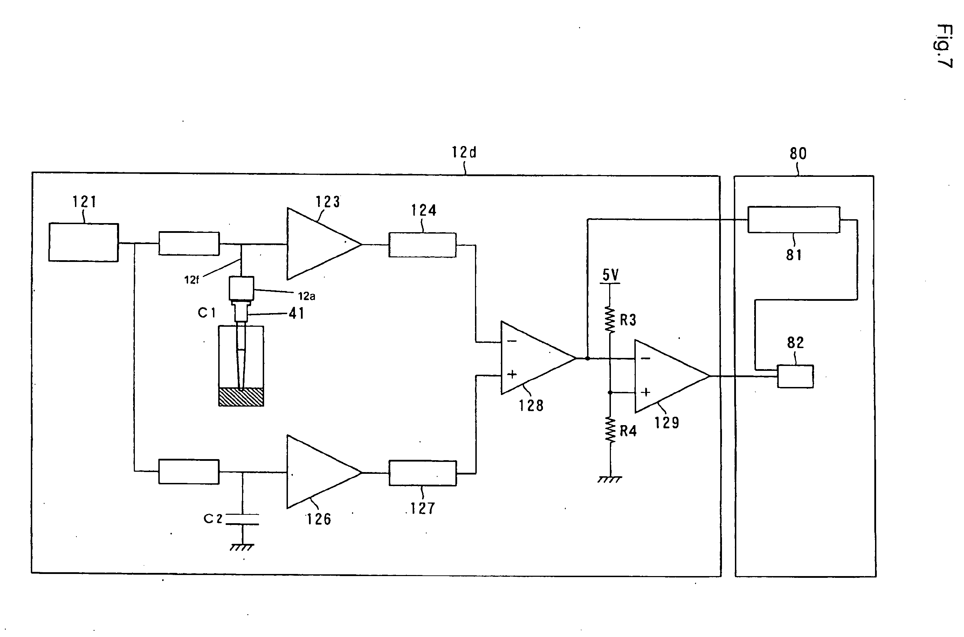

In the present embodiment, the electrostatic capacitance sensor 12d includes an oscillation circuit 121, resistor R1, buffer circuit 123, detection circuit 124, resistor R2, condenser C2, buffer circuit 126, detection circuit 127, differential amplification circuit 128, and comparator 129, as shown in Fig. 7. The oscillation circuit 121 oscillates a voltage having a frequency of several hundred kilohertz (in the present embodiment, approximately 800 kHz), and is connected to the resistors R1 and R2. A lead wire 12f is connected between the resistor R1 and buffer circuit 123, and the nozzle 12a is connected to the lead wire 12f (refer to Fig. 4). The electrostatic capacitance C1 reflects the electrostatic capacitance of the dispensing mechanism 10 when a pipette tip 41 is not installed to the nozzle 12a. Furthermore, it includes the electrostatic capacitance of the pipette tip 41 when the pipette tip 41 is installed to the nozzle 12a. The electrostatic capacitance C1 includes the electrostatic capacitance of the liquid and the pipette tip 41 when the pipette tip 41 installed to the nozzle 12a is immersed in the liquid. In this way, the electrostatic capacitance C1 is a capacitance which changes depending on whether or not the pipette tip 41 is installed and in accordance with the amount of liquid into which the pipette tip 41 is immersed. The resistance value of the resistor R1 and the electrostatic capacitance C1, which includes the pipette tip 41 before the pipette tip 41 is immersed in the liquid, are set in the vicinity of high-range cutoff of the oscillation frequency (approximately 800 kHz) of the oscillating circuit 121. In this way the amplitude of the voltage value can be reduced as the electrostatic capacitance C1 increases. The buffer circuit 123 is connected to the resistor R1, and connected to the buffer circuit 123 is a detection circuit 124 which has a function of converting the output voltage from the buffer circuit 123 to a DC signal.

The resistor R2 is connected to the condenser C2 having a predetermined electrostatic capacitance, and the condenser C2 is grounded. The resistor R2 has a predetermined resistance value, and is set so as to have the same value as the resistance value of the resistor R1. The electrostatic capacitance of the condenser C2 is set to the same value as the electrostatic capacitance C1 when the pipette tip 41 is not installed to the nozzle 12a. The electrostatic capacitance of the lead wire 12f, and the wiring from the resistor R2 to the condenser C2 can be ignored since they are sufficiently small compared to the electrostatic capacitance C1 and C2. The buffer circuit 126 is connected to the resistor R2, and connected to the buffer circuit 126 is the detection circuit 127 which has a function of converting the output voltage from the buffer circuit 126 to a DC signal. Furthermore, the outputs of the detection circuits 124 and 127 are respectively connected to the input terminals of the differential amplification circuit 128. The differential amplification circuit 128 has a function of amplifying the difference in potentials of the output signal from the detection circuit 124 and the output signals from the detection circuit 127. The differential amplification circuit 128 is constructed so as to change the gain (degree of amplification) in accordance with the magnitude of the electrostatic capacitance C1.

The output of the differential amplification circuit 128 is connected to the inverted input terminal of the comparator 129. A standard voltage, which is resistance-divided obtained by dividing a predetermined voltage (in the present embodiment, 5 V) by the resistors R1 and R2, is input to the non-inverted input terminal of the comparator 129. The comparator 129 outputs digital signals for the controller 82 to determine whether or not the pipette tip 41 is installed to the syringe unit 12. Specifically, when a pipette tip 41 is installed to the nozzle 12a, a signal higher than the standard voltage is input to the inverted input terminal of the comparator 129, and a digital signal (for example, [0]) is output which represents a negative voltage. Furthermore, when a pipette tip 41 is not installed to the nozzle 12a, a signal lower than the standard voltage is input to the inverted input terminal of the comparator 129, and a digital signal (for example, [1]) is output which represents a positive voltage.

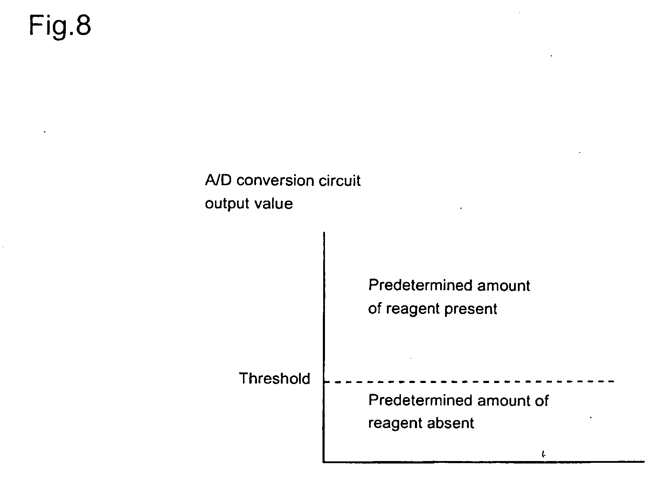

In the present embodiment, the control circuit board 80 monitors whether or not a pipette tip 41 is installed to the syringe unit 12 of the dispensing mechanism 10 during the transfer period of the dispensing mechanism 10 by the transfer unit 70, and controls the transfer unit 70 based on the monitoring result. The control circuit board 80 includes an A/D conversion circuit 81, and the controller 82, as shown in Fig. 7. The controller 82 is mainly a microcomputer, and includes a CPU, ROM, RAM and the like. The output signal of the differential amplification circuit 128 is input to the A/D conversion circuit 81. The A/D conversion circuit 81 is provided to detect whether or not a predetermined amount or more of reagent is present. That is, it is possible for the controller 82 to control the threshold value (refer to Fig. 8) for whether or not a predetermined amount or more of reagent is present by digitalization of the output signal of the differential amplification circuit 128 via the A/D conversion circuit 81. The threshold value for determining whether or not a predetermined amount or more of reagent is present is set using the keyboard 102a and mouse 102b of the data processing unit 102 shown in Fig. 1. The output signals of the comparator 129 and A/D conversion circuit 81 are input to the controller 82. The controller 82 controls the transfer unit 70, and determines whether or not the pipette tip 41 is installed to the syringe unit 12, determines whether or not a predetermined amount or more of reagent is present, and determines whether or not the tip of the pipette tip 41 is in contact with the liquid surface.

As shown in Figs. 2 and 3, a sample container table 21, having five sample container holes 21a and holders 21b, is removably inserted in a concavity (not shown) of the sample container holder 20. Sample containers 22, which accommodate soluble extract liquid (samples) prepared by processing (homogenizing, filtering, diluting) excised tissue beforehand, are placed in the five sample container holes 21a of the sample container holder 21.

A reagent container table 31, having two primer reagent container holes 31a and one enzyme reagent container hole 31b, and holder 31c, is removably inserted in a concavity (not shown) of the reagent container holder 30. The primer reagent container holes 31a of the reagent container holder 30 are provided at predetermined spacing along the Y-axis direction, and the enzyme reagent container holes 31b are provided only on the front left side. At the front left side of the primer reagent container holes 31a and enzyme reagent container holes 31b (Fig. 3) are arranged a primer reagent container 32a accommodating a cytokeratin 19(CK19) primer reagent, and enzyme reagent container 32b accommodating CK19 and a β-actin shared enzyme reagent. Furthermore, a primer reagent container 32a accommodating a β -actin primer reagent is arranged in the primer reagent container hole 31a on the front right side.

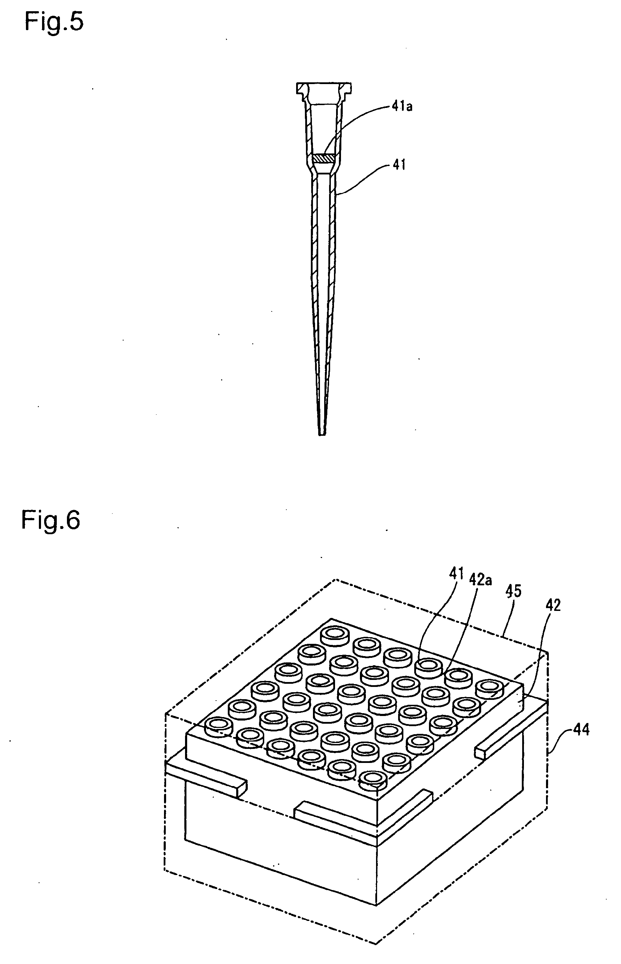

Two racks 42 having 36 provided with holes 42 capable of accommodating 36 pipette tips 41 are removably inserted in two concavities (not shown) of a tip holder 40. The tip holder 40 is provided with two release buttons 43. When the release buttons 43 are pressed, the rack 42 can be removed. The pipette tip 41 is formed of a flexible resin material containing carbon, and has an internal filter 41a. The internal filter 41a has a function of preventing erroneous flow of the fluid to the syringe unit 12. The pipette tip 41 is irradiated by an electron beam when packed before shipment so as to not be adversely affected by nucleic acid amplification by resolving enzymes such as human saliva and the like which may adhere during the pipette tip 41 manufacturing process. Furthermore, the rack 42 in which the pipette tips 41 are loaded is stored with a bottom cover 44 and top cover 45 installed, as shown in Fig. 6, before being placed in the tip holder 40.

As shown in Fig. 3, the tip disposal unit 50 is provided with two tip disposal holes 50a for disposing of used pipette tips 41. A narrow channel 50b having a width smaller than the tip disposal hole 50a is provided to link the tip disposal holes 50a.

Each reaction detection block 60a of the reaction detection unit 60 includes a reaction unit 61, two turbidity detectors 62, and cover close mechanism 63, as shown in Fig. 2. Each reaction unit 61 is provided with two detection cell holes 61a for placement of a detection cell 65, as shown in Fig. 3.

As shown in Fig. 3, the turbidity detector 62 includes an LED light source 62a, which is a blue color LED with a wavelength of 465 nm mounted on a base 64a arranged on one side surface of the reaction unit 61, and a photodiode photoreceptor 62b mounted a base 64b arranged on the other side of the reaction unit 61. A set of turbidity detectors 62 including one LED light source 62a and one photodiode photoreceptor 62 are arranged in pairs in the reaction detection block 60a. Accordingly, the turbidity detection unit 62 including a total of 10 sets of LED light sources 62a and photodiode photoreceptors 62b are disposed in five reaction detection blocks 60a. A LED light source 62a and its corresponding photodiode photoreceptor 62b are arranged such that light approximately 1 mm in diameter is emitted from the LED light source 62a and irradiates the bottom part of the detection cell 65 so that the light can be received by the photodiode photoreceptor 62b. The LED light source 62a and the photodiode photoreceptor 62b have the functions of detecting the presence/absence of the detection cell by the intensity of the light received by the photodiode photoreceptor 62b, and detecting (monitoring) in real time the turbidity of the liquid accommodated within the detection cell 65.

In the present embodiment, as shown in Figs. 2 and 3, the transfer unit 70 includes a direct-drive guide 71 and ball screw 72 for moving the dispensing mechanism 10 in the Y-axis direction, stepping motor 73 for driving the ball screw 72, direct-drive guide 74 and ball screw 75 for moving the dispensing mechanism 10 in the X-axis direction, and stepping motor 76 for driving the ball screw 75. As shown in Fig. 3, a rail 71a of the Y-axis direct-drive guide 71 and a rail 72a of the X-axis direct-drive guide 72 are mounted on a frame 77. As shown in Fig. 3, a support 72b for the other end of the ball screw 72 is mounted to the frame 77 through a stepping motor 73. The linear moving part (not shown) of the ball screw 72 and the slide 71b of the Y-axis direct-drive guide 71 are mounted on the arm 11 of the dispensing mechanism 10. A support 75a of one end of the ball screw 75 and a rail 74a of the X-axis direct-drive guide 74 are mounted on a support platform 78. A support 75b for the other end of the ball screw 75 and a slide (not shown) of the X-direction direct-drive guide 74 are mounted on the frame 77. A stepping motor 76 is mounted on the support 75b of the other end of the ball screw 75. The movement of the dispensing mechanism 10 in the XY directions is accomplished by the rotation of the ball screws 72 and 75 via the stepping motors 73 and 76.

The operation of the gene amplification detection device 100 is described below with reference to Figs. 1 through 8.

First, as shown in Figs. 2 and 3, a sample container 22 accommodating soluble extract liquid (sample) prepared by processing (homogenizing, filtering, diluting) excised tissue beforehand is placed in the sample container hole 21a of the sample container table 21. Furthermore, a primer reagent container 32a accommodating CK19 (cytokeratin) primer reagent, and enzyme reagent container 32b accommodating enzyme reagent of shared CK19 and β-actin are respectively placed in the primer reagent container hole 31a and the enzyme reagent container hole 31b on the front left side. A primer reagent container 32a accommodating β-actin primer reagent is placed in the primer reagent container hole 31a on the front right side. Two racks 42 housing 36 disposable pipettes 41 are inserted in the concavities (not shown) of the tip holder 40. In this case, since the initial position (origin position) of the arm 11 of the dispensing mechanism 10 is above the tip disposal unit 50 at a position a distance above the tip holder 40, as shown in Figs. 2 and 3, the two racks 42 can easily be inserted in the concavities (not shown) of the tip holder 40. Furthermore, two cells 66a of the detection cell 65 are placed in two detection cell holes 61a of the reaction unit 61 of each reaction detection block 60a.

The operation of the assay unit 101 is started by the keyboard 102a or mouse 102b after setting the assay criteria and recording the samples has been accomplished using the keyboard 102a and mouse 102b of the data processing unit 102 shown in Fig. 1.

When the operation of the assay unit 10 starts, the arm 11 of the dispensing mechanism 10 is moved from the start position to the tip placement position by the transfer unit 70, and thereafter two syringe units 12 of the dispensing mechanism 10 are lowered in the tip holder 40. In this way, since the tips of the nozzles 12a of the two syringe units 12 are pressed into the openings at the top of the two pipette tips 41, a pipette tip 41 is automatically installed to the tips of the nozzles 12a of the two syringe units 12, as shown in Fig. 4. Then, after the two syringe units 12 are lifted, the arm 11 of the dispensing mechanism 10 is moved in the X-axis direction above the two primer reagent containers 32a, which accommodate CK19 and β-actin, placed in the reagent container table 31 by the transfer unit 70. Next, the tips of the two pipette tips 41 installed to the nozzles 12a of the two syringe units 12 are respectively inserted into the liquid surface of the CK19 and β-actin primer reagents within the two primer reagent containers 32a by moving the two syringe units 12 downward. Then, the CK19 and β-actin primer reagents within the two primer reagent containers 32a are suctioned by the pumps 12b of the syringe units 12.

When primer reagent is being suctioned, the tip of the pipette tip 41, which is formed of electrically conductive resin, contacting the liquid surface is monitored by controller 82 based on the output of the electrostatic capacitance sensor 12d (refer to Fig. 4), and the pressure during suctioning by the pump 12b is monitored by controller 82 based on the output of the pressure sensor 12e (refer to Fig. 4). Whether or not suctioning is reliably performed can be monitored by the controller 82.

In this embodiment, during the period after the pipette tip 41 is installed to the syringe unit 12 until the syringe unit 12 is transferred to the tip disposal unit 50, whether or not the pipette tip 41 has been removed from the syringe unit 12 is monitored a predetermined intervals (for example, intervals of 0.1 sec) by the controller 82. The period of the transfer also includes not only the on-going transfer, but also the periods of stopping above the suction position and above the discharge position. In regard to details of the monitoring operation, since the electrostatic capacitance C1 described using Fig. 7 becomes identical to the electrostatic capacitance C2 when the pipette tip 41 is not installed to the syringe unit 12, the amplitude of the voltage input to the buffer circuit 123 becomes identical to the amplitude of the voltage input to the buffer circuit 126. Therefore, since the output voltage of the differential amplification circuit 128 approaches 0 V, the output voltage of the differential amplification circuit 128, which is input to the inverted input terminal of the comparator 129, decreases to less than the standard voltage input to the non-inverted input terminal. As a result, the output signal of the comparator 129 becomes a signal (for example, [1]) representing a positive output voltage. On the other hand, because the electrostatic capacitance C1 becomes greater than the electrostatic capacitance C2 when a pipette tip 41 is installed to the syringe unit 12, the amplitude of the voltage input to the buffer circuit 123 becomes smaller than the amplitude of the voltage input to the buffer circuit 126. Therefore, since the output voltage of the differential amplification circuit 128 is greater than 0 V (approximately 0.6 V), the output voltage of the differential amplification circuit 128, which is input to the non-inverted input terminal of the comparator 129, becomes greater than the standard voltage input to the non-inverted input terminal. As a result, the output signal of the comparator 129 becomes a signal representing a negative output voltage (for example, [0]). Then, whether or not the pipette tip 41 is installed to the syringe unit 12 can be determined by the controller 82 determining whether the output signal of the comparator 129 is [0] or [1].

When it is determined that the pipette tip 41 has been removed from the syringe unit 12 during the period when the syringe unit 12 is transferred from the tip holder 40 to the tip disposal unit 50, an error message is displayed on the display 102c of the data processing unit 102 after the dispensing mechanism 10 has been transferred to the origin position by the transfer unit 70. Thereafter, the user executes an error recovery process.

In the present embodiment, whether or not a predetermined amount (for example, 20 µl) or more of primer reagent is present is monitored during the suctioning of the primer reagent. That is, since the electrostatic capacitance C1 is large when a predetermined amount (for example, 20 µl) or more of primer reagent is present, there is a great decrease in the amplitude of the voltage. Therefore, the output value of the A/D conversion circuit 81 also increases because the output voltage of the differential amplification circuit 128 increases. As a result, the output value of the A/D conversion circuit 81 becomes greater than the threshold value shown in Fig. 8. In this case, the predetermined amount (for example, 20 µl) or more of primer reagent is determined to be present by the controller 82. However, when the predetermined amount (for example, 20 µl) or more of primer reagent is not present, there is a slight decrease in the amplitude of the voltage because the electrostatic capacitance C1 is small. Therefore, the output value of the A/D conversion circuit 81 also becomes small because the output voltage of the differential amplification circuit 128 is small. As a result, the output value of the A/D conversion circuit 81 is less than the threshold value shown in Fig. 8. In this case, it is determined that the predetermined amount (for example, 20 µl) or more of primer reagent is not present by the controller 82. When it is determined that the predetermined amount (for example, 20 µl) or more of primer reagent is not present during suctioning, the dispensing mechanism 10 is moved to the origin position, and thereafter an error message is displayed on the display 102c of the data processing unit 102. Subsequently, the user performs an error recovery process.

After the primer reagent is suctioned and the two syringe units 12 are lifted, the arm 11 of the dispensing mechanism 10 is raised above the reaction detection block 60a positioned at the innermost side (inner front side of the apparatus) by the transfer unit 70. This time the arm 11 of the dispensing mechanism 10 is moved so as to not pass above the other second through fifth reaction detection blocks counting from the inside. Then, at the innermost reaction detection block 60a, two pipette tips 41 installed to the nozzles 12a of the two syringe units 12 are respectively inserted into the two cells 66a of the detection cell 65 by lowering the two syringe units 12. Then, the two primer reagents CK19 and β-actin are respectively discharged into the two cells 66a using the pumps 12b of the syringe units 12. During the discharge (discharge time), the contact of the tip of the pipette tip 41 formed of conductive resin with the liquid surface is monitored by the controller 82 based on the output of the electrostatic capacitance sensor 12d (refer to Fig. 4), and the discharge pressure of the pumps 12b is monitored by the controller 82 based on the output of the pressure detection sensor 12e, similar to when suctioning. Whether or not the discharge is reliably accomplished can be monitored by the controller 82. The suctioning and discharging of the subsequent enzyme reagent and sample can also be similarly monitored by the controller 82.

After the primer reagent is discharged and after the two syringe units 12 are lifted, the arm 11 of the dispensing mechanism 10 is moved in the X-axis direction above the tip disposal unit 50 by the transfer unit 70. In the present embodiment, the time required for the dispensing mechanism 10 to be moved from above the tip holder 40 through a predetermined dispensing position to above the tip disposal unit 50 is approximately 30 seconds. Disposal of the pipette tip 41 is accomplished at the tip disposal unit 50. Specifically, the pipette tips 41 are inserted into the two tip disposal holes 50a (refer to Fig. 3) of the tip disposal unit 50 by lowering the two syringe units 12. In this state, the pipette tips 41 are moved below the channel 50b by the transfer unit 70 moving the arm 11 of the dispensing mechanism 10 in the Y-axis direction. Then, the flange on the top surface of the pipette tip 41 comes into contact with the bottom surface of the bilateral sides of the channel 50b and receives a downward force from the bottom surface by the upward movement of the two syringe units 12, such that the pipette tip 41 is automatically detached from the nozzle 12a of the two syringe units 12. In this way the pipette tips 41 are disposed of in the tip disposal unit 50. The pipette tips 41 which have been disposed of in the tip disposal unit 50 may be disposed directly, or washed and reused.

The arm 11 of the dispensing mechanism 10 is again moved to the tip holder 40 by the transfer unit 70. In the present embodiment, whether or not the pipette tip 41 is detached from the syringe unit 12 is monitored a predetermined intervals (for example, 0.1 seconds) during the period after the pipette tip 41 is disposed of in the tip disposal unit 50 until the dispensing mechanism is moved to the tip holder 40. This monitoring operation is similar to the operation of monitoring whether or not the pipette tip 41 is not removed during the transfer to the tip disposal unit 50 after the pipette tip 41 has been installed to the syringe unit 12. When the controller 82 determines that the pipette tip 41 is not detached (removed) from the syringe unit 12 during the period after the pipette tip 41 is disposed of in the tip disposal unit 50 until the dispensing mechanism is moved to the tip holder 40, the dispensing mechanism 10 is moved to the origin position by the transfer unit 70, and thereafter an error message is displayed on the display 102c of the data processing unit 102. Subsequently, the user performs an error recovery process.

The time required for the dispensing mechanism 10 to be moved from above the tip disposal unit 50 to above the tip holder 40 is approximately 5 seconds.

After the syringe units 12 are moved to the tip holder 40, two new pipettes 41 are automatically installed at the tip of the nozzles 12a of the two syringe units 12 by an operation similar to that previously described at the tip holder 40. Then, the arm 11 of the dispensing mechanism 10 is moved in the X-axis direction by the transfer unit 70 above the enzyme reagent container 32b accommodating shared enzyme reagent of CK19 and β-actin placed on the reagent container table 31, and thereafter the enzyme reagent within the enzyme reagent container 32b is suctioned. Specifically, after one syringe unit 12 positioned above the enzyme reagent container 32b is lowered and enzyme reagent is suctioned, this syringe unit 12 is raised. Thereafter, the arm 11 of the dispensing mechanism 10 is moved in the Y-axis direction by the transfer unit 70 to position the other syringe unit 12 above the same enzyme reagent container 32b. Then, after this other syringe unit 12 is lowered and has suctioned enzyme reagent from the same enzyme reagent container 32b, this other syringe unit 12 is raised. Then, after the arm 11 of the dispensing mechanism 10 is moved above the innermost reaction detection block 60a by the transfer unit 70, the shared enzyme reagent CK19 and β-actin are discharged into two cells 66a of the detection cell 65. In this case, the arm 11 of the dispensing mechanism 10 is moved so as to not pass above the other second through fifth reaction detection blocks counting from the inside. After the enzyme reagents have been discharged, the arm 11 of the dispensing mechanism 10 is moved above the tip disposal unit 50 by the transfer unit 70, and disposal of the pipette tips 41 is accomplished.

After the arm 11 of the dispensing mechanism 10 is moved again to the tip holder 40 by the transfer unit 70, two new pipette tips 41 are automatically installed to the nozzles 12a of the two syringe units 12. Then, the arm 11 of the dispensing mechanism 10 is moved in the X-axis direction above the sample container 22 accommodating a sample placed on the sample container table 21 by the transfer unit 70, and subsequently the sample within the same sample container 22 is suctioned. Specifically, after one syringe unit 12 positioned above one sample container 22 is lowered and the sample is suctioned, this syringe unit 12 is raised. Thereafter, the arm 11 of the dispensing mechanism 10 is moved in the Y-axis direction by the transfer unit 70 to position the other syringe unit 12 above the same sample container 22. Then, after this other syringe unit 12 is lowered and has suctioned the sample from the same sample container 22, this other syringe unit 12 is raised. Then, after the arm 11 of the dispensing mechanism 10 is moved above the innermost reaction detection block 60a by the transfer unit 70, the two syringe units 12 are lowered and the identical samples are discharged into two cells 66a of the detection cell 65. In this case, the arm 11 of the dispensing mechanism 10 is moved so as to not pass above the other second through fifth reaction detection blocks counting from the inside.

When sample is discharged into the two cells 66a of the detection cell 65, the sample and enzyme reagent and primer reagent CK19 and β-actin accommodated in the two cells 66a are mixed by multiple repetitions of the suction and discharge actions using the pump 12b of the two syringe units 12. When dispensing the primer reagent, enzyme reagent, and sample, the fluid temperature within the detection cell 65 id maintained at approximately 20°C. Thereafter, the arm 11 of the dispensing mechanism 10 is lifted above the tip disposal unit 50 by the transfer unit 70, and subsequently the disposal of the pipette tips 41 is accomplished.

After the primer reagent, enzyme reagent, and sample are discharged into the cell 66a, the cover closing operation of the cover 67a of the detection cell 65 is performed. After the cover closing operation is completed, the marker nucleic acid (mRNA) is amplified in a LAMP (nucleic acid amplification) reaction by raising the fluid temperature within the detection cell 65 from approximately 20°C to approximately 65°C. Then, the turbidity induced by magnesium pyrophosphate generated in conjunction with the amplification is detected by a nephelometric method. Specifically, the fluid turbidity within the detection cell 65 during the amplification reaction is detected (monitored) in real time using the LED light source 62a and photodiode photoreceptor 62b shown in Fig. 3.

In the present embodiment, the removal of the pipette tip 41 during transport after the pipette tip 41 has been installed can be detected because whether or not the pipette tip 41 is installed to the syringe unit 12 is monitored even during transfer after the pipette tip 41 is installed to the syringe unit 12 by monitoring whether or not the pipette tip 41 is installed to the syringe unit 12 at predetermined intervals in the period after the pipette tip 41 is installed to the syringe unit 12 until the syringe unit 12 is transferred to the tip disposal unit 50, that is, during the period when the pipette tip 41 is moved from above the tip holder 40 to the sample container holder 20 and the reagent container holder 30, during the period when moved from the reagent container holder 30 to the reaction detection unit 60, and during the period when moved from the reaction detection unit 60 to the tip disposal unit 50. In this way reliable analysis result can be obtained because inaccurate dispensation caused by removal of the pipette tip 41 after installation can be prevented. Furthermore, in the present embodiment, monitoring of whether or not the pipette tip 41 is installed to the syringe unit 12 can be reliably accomplished by monitoring at extremely short intervals of 0.1 second.

In the present embodiment, whether or not the pipette tip 41 is removed can be detected when the pipette tip 41 is stopped at the suction position and discharge position and not only when the pipette tip 41 is removed during transfer after the pipette tip 41 is installed by monitoring the removal of the pipette tip 41 even when stopped at a predetermined suction position and discharge position during the transfer by the transfer unit 70 and not only during the period when the dispensing mechanism 10 is moved by the transfer unit 70.

In the present embodiment, monitoring whether or not the pipette tip 41 is installed to the syringe unit 12 is accomplished by monitoring electrostatic capacitance, and detection is accomplished not only when the pipette tip 41 is removed from the syringe unit 12, but also when the pipette tip 41 contacts part of the assay unit 101 of the analyzer 100 while the syringe unit 12 is transferred, and when a user mistakenly touches the pipette tip 41. Furthermore, the electrostatic capacitance of the pipette tip 41 is easily detected by forming the pipette tip 41 of an electrically conductive resin material.

As described above, in the present embodiment, whether or not transfer occurs with the pipette tip 41 reliably detached is detectably during the period in which the dispensing mechanism 10 is moved from the tip disposal unit 50 to the tip holder 40 by monitoring whether the pipette tip 41 has been removed from the syringe unit 12 even during the period in which the dispensing mechanism 10 is moved from the tip disposal unit 50 to the tip holder 40. In this way detachment of the pipette tip 41 can be reliably detected.

In the present embodiment, in addition to detecting the presence/absence of the installed pipette tip 41, it is possible to detect whether or not a predetermined amount or more of reagent is accommodated in the reagent container by monitoring whether or not a predetermined amount or more of reagent is accommodated in the reagent container by monitoring the electrostatic capacitance when the pipette tip 41 is inserted into the reagent container as described above.

The previously described embodiment is to be understood to be an example in all aspects and not in any way limited. The scope of the present invention is described by the scope of the claims and not by the description of the embodiments described above, and all modification are to be understood to be included within the scope of the claims and the meanings and equivalences therein.

For example, although the analyzer of the present invention has been described by way of example in an application to a gene amplification detection device for amplifying target nucleic acids by the LAMP method in the present embodiment, the present invention is not limited to this application and may be variously applied to gene amplification devices which amplify target nucleic acids by the polymerase chain reaction (PCR) method and ligase chain reaction (LCR) method. The analyzer of the present invention may further be applied to analyzers other than gene amplification devices.

Although the embodiment is described in terms of monitoring the removal (detachment) of a dispensing tip by the electrostatic capacitance, the present invention is not limited to this arrangement, inasmuch as the removal (detachment) of the dispensing tip also may be monitored by the mass, pressure, amount of oscillation, electrical resistance, amount of reflected light, amount of transmitted light besides electrostatic capacitance.

Although the embodiment is described in terms of monitoring the presence/absence of a pipette tip at predetermined intervals, the present invention is not limited to this arrangement inasmuch as the presence/absence of the pipette tip also may be monitored at a predetermined position during the transfer period of the syringe unit 12 rather than at predetermined intervals, for example, when the syringe unit 12 is above a dispensing position such as above the reagent container holder 30, sample container holder 20, or reaction detection unit 60.

Although the embodiment is described in terms of monitoring the presence/absence of a pipette tip every 0.1 seconds, the present invention is not limited to this arrangement inasmuch as accurate monitoring can be accomplished by monitoring at intervals shorter than one second.

In the embodiment above, whether or not the reagent is present in a predetermined amount or more is monitored during suctioning, however, the present invention is not limited to this arrangement inasmuch as the residual amount of reagent may be monitored in addition to monitoring whether or not the reagent is present in a predetermined amount or more. The residual amount of reagent may be calculated by the controller 82 based on the output value of the A/D conversion circuit 81.

In the embodiment above, whether or not the reagent is present in a predetermined amount or more is monitored during suctioning of the primer reagent and enzyme reagent, however the present invention is not limited to this arrangement inasmuch as whether or not a sample is present in a predetermined amount or more also may be monitored during sample suctioning in addition to during the suctioning of the primer reagent and enzyme reagent.

Although the embodiment has been described in terms of monitoring the presence/absence of a pipette tip during a first transfer period in which the dispensing mechanism 10 is moved from a predetermined position above the tip holder 40 through a predetermined dispensing position to a predetermined position above the tip disposal unit 50, during a second transfer period in which the dispensing mechanism 10 is moved from a predetermined position above the tip disposal unit 50 to a predetermined position above the tip holder 40, the period from the completion of the first transfer period to the start of the second transfer period (period of the tip disposal operation by the tip disposal unit 50), and the period from the end of the second transfer period to the start of the first transfer period (period of the tip installation operation by the tip holder 40), the present invention is not limited to this arrangement inasmuch as various arrangements are possible, such as monitoring only during the first transfer period, monitoring only during the second transfer period, monitoring during both the first transfer period and second transfer period, monitoring during the first transfer period and from the completion of the first transfer period to the start of the second transfer period and the like. Additional arrangements are also possible such as monitoring only during the period in which the pipette tip 41 is moved from above the tip holder 40 to the sample container holder 20 and reagent container holder 30, monitoring only during the period in which the pipette tip 41 is moved from the sample container holder 20 to the reaction detection unit 60, monitoring only during the period in which the pipette tip 41 is moved from the reagent container holder 30 to the reaction detection unit 60, monitoring only during the period in which the pipette tip 41 is moved from the reaction detection unit 60 to the tip disposal unit 50 and the like. Furthermore, other suitable combinations of these monitoring periods are also possible.

In the embodiment above, the controller 82 determines the presence/absence of an installed pipette tip 41 based on a comparison of the electrostatic capacitance C1 and electrostatic capacitance C2, however, the present invention is not limited to this arrangement inasmuch as the presence/absence of the pipette tip 41 also may be determined by converting the magnitude of the electrostatic capacitance C1 to a digital signal which is input to the controller 82, which compares the input electrostatic capacitance C1 with a standard value stored beforehand.

Although the origin position of the dispensing mechanism 10 is above the tip disposal unit 50 in the above embodiment, the invention is not limited to this arrangement inasmuch as the origin position may be another position, such as above the tip holder 40 and the like.

## Claims

1. An analyzer comprising:
a dispensing unit (10) for dispensing a liquid and having a detachably installed dispensing tip (41);
a transfer unit (70) for transferring the dispensing unit (10);
a capacitance sensor (12d) connected to the dispensing unit (10) for outputting signals based on capacitance; and
a controller (82) configured to control the transfer unit (70);
wherein the controller (82) is configured to determine whether or not a dispensing tip (41) is installed to the dispensing unit (10) based on the output signal from the capacitance sensor (12d).

2. The analyzer of Claim 1, wherein the transfer period includes a period in which the transfer unit (70) is configured to transfer the dispensing unit (10), and a period in which the transfer unit (70) is configured to stop during the transfer.

3. The analyzer of Claim 1 further comprising:
a dispensing tip storage part (42) for storing the dispensing tip (41) to be installed to the dispensing unit (10);
a dispensing tip disposal part (50) for disposing of the dispensing tip (41);
a first container installation part for installing a first container for accommodating a predetermined liquid; and
a second container installation part for installing a second container for dispensing the predetermined liquid;
wherein, when the dispensing tip (41) is installed, the dispensing unit (10) suctions liquid from the first container and discharges the liquid into the second container;
the transfer unit (70) is arranged to move the dispensing unit (10) from the dispensing tip storage part (42) through the first container installation part and second container installation part to the dispensing tip disposal part (50); and
the controller (82) is configured to monitor whether or not the dispensing tip (41) is installed to the dispensing unit (10) during the period in which the dispensing unit is moved from the dispensing tip installation position through the first container position and second container position to the dispensing tip disposal part, and is configured to control the transfer unit (70) based on the monitoring result.

4. The analyzer of Claim 1, wherein the controller (82) is configured to monitor whether or not the dispensing tip (41) is installed to the dispensing unit (10) at predetermined intervals during the transfer period.

5. The analyzer of Claim 1, wherein the controller (82) is configured to control the transfer unit (70) so as to move the dispensing unit (10) to an origin position when it is determined that a dispensing tip (41) is not installed to the dispensing unit (10) during the transfer period.

6. The analyzer of Claim 3, wherein the transfer unit (70) is configured to transfer the dispensing unit (10) from the dispensing tip disposal part (50) to the dispensing tip storage part (42); and
the controller (82) is configured to monitor whether or not the dispensing tip (41) is installed to the dispensing unit (10) during a period the dispensing unit (10) is moved from the dispensing tip disposal part (50) to the dispensing tip storage part (42), and is configured to control the transfer unit (70) based on the monitoring result.

7. The analyzer of Claim 6, wherein the controller (82) is configured to control the transfer unit (70) so as to move the dispensing unit (10) to the origin position when it is determined that a dispensing tip (41) is not installed to the dispensing unit (10) during the period the dispensing unit (10) is moved from the dispensing tip disposal part (50) to the dispensing tip storage part (42).

8. The analyzer of Claim 1 further comprising:
a dispensing tip storage part (42) for storing a dispensing tip (41) to be installed to the dispensing unit (10) ;
wherein the transfer period includes a period the transfer unit (70) is moved from above the dispensing tip storage part (42) to a predetermined position; and
the controller (82) is configured to monitor whether or not a dispensing tip (41) is installed to the dispensing unit (10) during this period.

9. The analyzer of Claim 1, further comprising:
a dispensing tip storage part (42) for storing a dispensing tip (41) to be installed to the dispensing unit (10); and
a dispensing tip disposal part (50) for disposing of the dispensing tip (41); and
wherein the transfer period includes a period the transfer unit (70) is moved from above the dispensing tip disposal part to above the dispensing tip storage part (42); and
the controller is configured to monitor whether or not a dispensing tip (41) is installed to the dispensing unit (10) during this period.

10. The analyzer of Claim 1 wherein the capacitance sensor (12d) is configured to compare the magnitude of the detected capacitance and a standard capacitance, and is configured to output the comparison result; and
the controller (82) is configured to determine whether or not a dispensing tip (41) is installed to the dispensing unit (10) based on the comparison result output from the capacitance sensor (12d).

11. The analyzer of Claim 1 wherein the capacitance sensor (12d) is configured to output a second signal based on capacitance; and
the controller (82) is configured to determine whether or not a predetermined amount or more of liquid to be suctioned by the dispensing unit is present.

12. The analyzer of Claim 1, wherein the controller (82) is configured to determine whether or not a dispensing tip (41) is installed to the dispensing unit (10) during a period the dispensing unit (10) is moved by the transfer unit (70).

13. An analyzing method comprising:
an installation step of installing a dispensing tip (41) to a dispensing unit (10) for dispensing a liquid;
a transfer step for moving the dispensing unit (10) to a predetermined position;
a monitoring step for monitoring whether or not a dispensing tip (41) is installed to the dispensing unit (10) based on the output signal from a capacitance sensor (12d) connected to the dispensing unit (10); and
a removing step for removing the dispensing tip (41) from the dispensing unit (10);
wherein monitoring whether or not a dispensing tip (41) is installed to the dispensing unit (10) is executed during the execution of the transfer step.

14. The analyzing method of Claim 13, wherein monitoring whether or not a dispensing tip (41) is installed to the dispensing unit (10) is executed at predetermined intervals during the execution of the transfer step.

15. The analyzing method of Claim 13, wherein monitoring whether or not a dispensing tip (41) is installed to the dispensing unit (10) is accomplished by monitoring capacitance.

16. The analyzing method of Claim 13 further comprising:
a second transfer step for moving the dispensing unit (10) to above the installation position for installing the dispensing tip (41) to the dispensing unit (10) after the removing step has been executed; and
wherein monitoring whether or not a dispensing tip (41) is installed to the dispensing unit (10) is executed during the execution of the transfer step and during execution of the second transfer step.

17. The analyzing method of Claim 16 further comprising:
an error output step for outputting an error when a dispensing tip (41) is determined to be installed to the dispensing unit (10) by monitoring executed during the execution of the second transfer step.

18. The analyzing method of Claim 15, wherein the monitoring step includes:
a step of obtaining a capacitance;
a step of comparing the obtained capacitance and a standard capacitance; and
a step of determining whether or not a dispensing tip (41) is installed to the dispensing unit (10) based on the comparison result.

19. The analyzing method of claim 13 further comprising:
a step of determining whether or not a predetermined amount or more of liquid to be suctioned by the dispensing unit (10) is present.

## Patentansprüche

1. Analysevorrichtung mit:
einer Abgabeeinheit (10) zum Abgeben einer Flüssigkeit und mit einer abnehmbar installierten Abgabespitze (41);
einer Transfereinheit (70) zum Transferieren der Abgabeeinheit (10);
einem kapazitiven Sensor (12d), der mit der Abgabeeinheit (10) zum Ausgeben von auf Kapazität basierenden Signalen verbunden ist; und
einer Steuerung (82), die eingerichtet ist, die Transfereinheit (70) zu steuern;
wobei die Steuerung (82) eingerichtet ist, zu bestimmen, ob basierend auf dem Ausgabesignal des kapazitiven Sensors (12d) eine Abgabespitze (41) an der Abgabeeinheit (10) installiert ist oder nicht.

2. Analysevorrichtung nach Anspruch 1, bei der die Transferdauer eine Zeitspanne einschließt, während der die Transfereinheit (70) eingerichtet ist, die Abgabeeinheit (10) zu transferieren, und eine Zeitspanne, während der die Transfereinheit (70) eingerichtet ist, während des Transfers anzuhalten.

3. Analysevorrichtung nach Anspruch 1, ferner mit:
einem Abgabespitzenlagerteil (42) zum Lagern der an der Abgabeeinheit (10) zu installierenden Abgabespitze (41);
einem Abgabespitzenentsorgungsteil (50) zum Entsorgen der Abgabespitze (41);
einem ersten Behälterinstallationsteil zum Installieren eines ersten Behälters für die Aufnahme einer festgelegten Flüssigkeit; und
einem zweiten Behälterinstallationsteil zum Installieren eines zweiten Behälters für eine Abgabe der festgelegten Flüssigkeit;
wobei, wenn die Abgabespitze (41) installiert ist, die Abgabeeinheit (10) Flüssigkeit von dem ersten Behälter absaugt und die Flüssigkeit in den zweiten Behälter abgibt;
die Transfereinheit (70) angeordnet ist, um die Abgabeeinheit (10) von dem Abgabespitzenlagerteil (42) durch das erste Behälterinstallationsteil und das zweite Behälterinstallationsteil zu dem Abgabespitzenentsorgungsteil (50) zu bewegen; und
die Steuerung (82) eingerichtet ist, zu überwachen, ob die Abgabespitze (41) während einer Zeitspanne an der Abgabeeinheit (10) installiert ist oder nicht, in der die Abgabeeinheit von der Abgabespitzeninstallationsposition durch die erste Behälterposition und zweite Behälterposition zu dem Abgabespitzenentsorgungsteil bewegt wird, und eingerichtet ist, die Transfereinheit (70) basierend auf dem Überwachungsergebnis zu steuern.

4. Analysevorrichtung nach Anspruch 1, bei der die Steuerung (82) eingerichtet ist, zu überwachen, ob die Abgabespitze (41) an der Abgabeeinheit (10) zu festgelegten Intervallen während der Transferdauer installiert ist oder nicht.

5. Analysevorrichtung nach Anspruch 1, bei der die Steuerung (82) eingerichtet ist, die Transfereinheit (70) zu steuern, um die Abgabeeinheit (10) zu einer Ausgangsposition zu bewegen, wenn festgestellt wird, dass eine Abgabespitze (41) während der Transferdauer nicht an der Abgabeeinheit (10) installiert ist.

6. Analysevorrichtung nach Anspruch 3, bei der die Transfereinheit (70) eingerichtet ist, die Abgabeeinheit (10) von dem Abgabespitzenentsorgungsteil (50) zu dem Abgabespitzenlagerteil (42) zu transferieren; und
die Steuerung (82) eingerichtet ist, zu überwachen, ob die Abgabespitze (41) während einer Zeitspanne an der Abgabeeinheit (10) installiert ist oder nicht, in der die Abgabeeinheit (10) von dem Abgabespitzenentsorgungsteil (50) zu dem Abgabespitzenlagerteil (42) bewegt wird, und eingerichtet ist, die Transfereinheit (70) basierend auf dem Überwachungsergebnis zu steuern.

7. Analysevorrichtung nach Anspruch 6, bei der die Steuerung (82) eingerichtet ist, die Transfereinheit (70) zu steuern, um die Abgabeeinheit (10) zu der Ausgangsposition zu bewegen, wenn festgestellt wird, dass eine Abgabespitze (41) während der Zeitspanne nicht an der Abgabeeinheit (10) installiert ist, in der die Abgabeeinheit (10) von dem Abgabespitzenentsorgungsteil (50) zu dem Abgabespitzenlagerteil (42) bewegt wird.

8. Analysevorrichtung nach Anspruch 1, ferner mit:
einem Abgabespitzenlagerteil (42) zum Lagern einer an der Abgabeeinheit (10) zu installierenden Abgabespitze (41);
wobei die Transferdauer eine Zeitspanne einschließt, in der die Transfereinheit (70) von über dem Abgabespitzenlagerteil (42) zu einer vorgesehenen Position bewegt wird; und
die Steuerung (82) eingerichtet ist, zu überwachen, ob während dieser Zeitspanne eine Abgabespitze (41) an der Abgabeeinheit (10) installiert ist oder nicht.

9. Analysevorrichtung nach Anspruch 1, ferner mit:
einem Abgabespitzenlagerteil (42) zum Lagern einer an der Abgabeeinheit (10) zu installierenden Abgabespitze (41); und
einem Abgabespitzenentsorgungsteil (50) zum Entsorgen der Abgabespitze (41); und
wobei die Transferdauer eine Zeitspanne einschließt, in der die Transfereinheit (70) von über dem Abgabespitzenentsorgungsteil über das Abgabespitzenlagerteil (42) bewegt wird; und
die Steuerung eingerichtet ist, zu überwachen, ob während dieser Zeitspanne eine Abgabespitze (41) an der Abgabeeinheit (10) installiert ist oder nicht.

10. Analysevorrichtung nach Anspruch 1, bei welcher der kapazitive Sensor (12b) eingerichtet ist, die Höhe der erfassten Kapazität und einer Standardkapazität zu vergleichen, und eingerichtet ist, das Vergleichsergebnis auszugeben; und
die Steuerung (82) eingerichtet ist, zu bestimmen, ob basierend auf dem Vergleichsergebnis, das von dem kapazitiven Sensor (12d) ausgegeben wird, eine Abgabespitze (41) an der Abgabeeinheit (10) installiert ist oder nicht.

11. Analysevorrichtung nach Anspruch 1, bei welcher der kapazitive Sensor (12d) eingerichtet ist, ein zweites auf Kapazität basierendes Signal auszugeben; und
die Steuerung (82) eingerichtet ist, zu bestimmen, ob eine festgelegte Menge oder mehr einer durch die Abgabeeinheit aufzusaugenden Flüssigkeit vorhanden ist.

12. Analysevorrichtung nach Anspruch 1, bei der die Steuerung (82) eingerichtet ist, zu bestimmen, ob während einer Zeitspanne, in der die Abgabeeinheit (10) durch die Transfereinheit (70) bewegt wird, eine Abgabespitze (41) an der Abgabeeinheit (10) installiert ist oder nicht.

13. Analyseverfahren mit:
einem Installationsschritt zum Installieren eine Abgabespitzer (41) an einer Abgabeeinheit (10) für die Abgabe einer Flüssigkeit;
einem Transferschritt zum Bewegen der Abgabeeinheit (10) zu einer festgelegten Position;
einem Überwachungsschritt zum Überwachen, ob basierend auf einem Ausgabesignal eines kapazitiven Sensors (12d), der mit der Abgabeeinheit (10) verbunden ist, eine Abgabespitze (41) an der Abgabeeinheit (10) installiert ist oder nicht; und
einem Entfernschritt zum Entfernen der Abgabespitze (41) von der Abgabeeinheit (10);
wobei das Überwachen, ob eine Abgabespitze (41) an der Abgabeeinheit (10) installiert ist oder nicht, während des Ausführens des Transferschritts ausgeführt wird.

14. Analyseverfahren nach Anspruch 13, bei dem das Überwachen, ob eine Abgabespitze (41) an der Abgabeeinheit (10) installiert ist oder nicht, in festgelegten Intervallen während des Ausführens des Transferschritts ausgeführt wird.

15. Analyseverfahren nach Anspruch 13, bei dem das Überwachen, ob eine Abgabespitze (41) an der Abgabeeinheit (10) installiert ist oder nicht, durch ein Überwachen der Kapazität erreicht wird.

16. Analyseverfahren nach Anspruch 13, ferner mit:
einem zweiten Transferschritt zum Bewegen der Abgabeeinheit (14) über die Installationsposition zum Installieren der Abgabespitze (41) an der Abgabeeinheit (10) nachdem der Entfernschritt ausgeführt worden ist; und
wobei das Überwachen, ob eine Abgabespitze (41) an der Abgabeeinheit (10) installiert ist oder nicht, während des Ausführens des Transferschritts und während des Ausführens des zweiten Transferschritts ausgeführt wird.

17. Analyseverfahren nach Anspruch 16, ferner mit:
einem Fehlerausgabeschritt zum Ausgeben eines Fehlers, wenn durch Überwachen der Ausführung während des Ausführens des zweiten Transferschritts bestimmt wird, das eine Abgabespitze (41) an der Abgabeeinheit (10) zu installieren ist.

18. Analyseverfahren nach Anspruch 15, bei dem der Überwachungsschritt aufweist:
einen Schritt zum Aufnehmen einer Kapazität;
einen Schritt zum Vergleichen der aufgenommenen Kapazität und einer Standardkapazität; und
einen Schritt zum Bestimmen, ob basierend auf dem Vergleichsergebnis eine Abgabespitze (41) an der Abgabeeinheit (10) installiert ist oder nicht.

19. Analyseverfahren nach Anspruch 13, ferner mit:
einem Schritt zum Bestimmen, ob eine festgelegte Menge oder mehr einer durch die Abgabeeinheit (10) aufzusaugenden Flüssigkeit vorhanden ist oder nicht.

## Revendications

1. Analyseur comprenant :
une unité de distribution (10) destinée à distribuer un liquide et possédant une pointe de distribution installée de manière amovible (41) :
une unité de transfert (70) destinée à transférer l'unité de distribution (10) ;
un capteur de capacité (12d) relié à l'unité de distribution (10) destiné à produire des signaux en fonction de la capacité ; et
un contrôleur (82) configuré pour contrôler l'unité de transfert (70) ;
dans lequel le contrôleur (82) est configuré pour déterminer si une pointe de distribution (41) est installée ou non sur l'unité de distribution (10) en fonction du signal produit par le capteur de capacité (12d).

2. Analyseur selon la revendication 1, dans lequel la période de transfert inclut une période dans laquelle l'unité de transfert (70) est configurée pour transférer l'unité de distribution (10), et une période dans laquelle l'unité de transfert (70) est configurée pour s'arrêter pendant le transfert.

3. Analyseur selon la revendication 1 comprenant en outre :
une partie de stockage (42) de la pointe de distribution pour stocker la pointe de distribution (41) qui doit être installée sur l'unité de distribution (10) ;
une partie d'évacuation (50) de la pointe de distribution pour évacuer la pointe de distribution (41) ;
une partie d'installation d'un premier récipient destinée à installer un premier récipient pour recevoir un liquide prédéterminé ; et
une partie d'installation d'un deuxième récipient destinée à installer un deuxième récipient pour distribuer le liquide prédéterminé ;
dans lequel, lorsque la pointe de distribution (41) est installée, l'unité de distribution (10) aspire du liquide à partir du premier récipient et rejette le liquide dans le deuxième récipient ;
l'unité de transfert (70) est agencée de façon à déplacer l'unité de distribution (10) depuis la partie de stockage (42) de la pointe de distribution à travers la partie d'installation du premier récipient et la partie d'installation du deuxième récipient jusqu'à la partie d'évacuation (50) de la pointe de distribution; et
le contrôleur (82) est configuré pour surveiller si la pointe de distribution (41) est installée ou non sur l'unité de distribution (10) pendant la période dans laquelle l'unité de distribution est déplacée depuis la position d'installation de la pointe de distribution à travers la position du premier récipient et la position du deuxième récipient jusqu'à la partie d'évacuation de la pointe de distribution, et est configuré pour contrôler l'unité de transfert (70) en fonction des résultats de surveillance.

4. Analyseur selon la revendication 1, dans lequel le contrôleur (82) est configuré pour surveiller si la pointe de distribution (41) est installée ou non sur l'unité de distribution (10) à des intervalles prédéterminés pendant la période de transfert.

5. Analyseur selon la revendication 1, dans lequel le contrôleur (82) est configuré pour contrôler l'unité de transfert (70) afin de déplacer l'unité de distribution (10) jusqu'à une position d'origine lorsqu'il est déterminé qu'une pointe de distribution (41) n'est pas installée sur l'unité de distribution (10) pendant la période de transfert.

6. Analyseur selon la revendication 3, dans lequel l'unité de transfert (70) est configurée pour transférer l'unité de distribution (10) à partir de la partie d'évacuation de la pointe de distribution (50) jusqu'à la partie de stockage de la pointe de distribution (42) ; et
le contrôleur (82) est configuré pour surveiller si la pointe distribution (41) est installée ou non à l'unité de distribution (10) pendant une période où l'unité de distribution (10) est déplacée depuis la partie d'évacuation (50) de la pointe de distribution jusqu'à la partie de stockage (42) de la pointe de distribution, et est configuré pour contrôler l'unité de transfert (70) en fonction des résultats de surveillance.

7. Analyseur selon la revendication 6, dans lequel le contrôleur (82) est configuré pour contrôler l'unité de transfert (70) afin de déplacer l'unité de distribution (10) jusqu'à la position d'origine lorsqu'il est déterminé qu'une pointe de distribution (41) n'est pas installée sur l'unité de distribution (10) pendant la période où l'unité de distribution (10) est déplacée depuis la partie d'évacuation (50) de la pointe de distribution jusqu'à la partie de stockage (42) de la pointe distribution.

8. Analyseur selon la revendication 1 comprenant en outre :
une partie de stockage (42) de la pointe de distribution pour stocker une pointe de distribution (41) qui doit être installée sur l'unité de distribution (10) ;
dans lequel la période de transfert inclut une période où l'unité de transfert (70) est déplacée depuis le haut de la partie de stockage (42) de la pointe de distribution jusqu'à une position prédéterminée ; et
le contrôleur (82) est configuré pour surveiller si une pointe de distribution (41) est installée ou non sur l'unité de distribution (10) pendant cette période.

9. Analyseur selon la revendication 1, comprenant en outre :
une partie de stockage (42) de la pointe distribution pour stocker une pointe de distribution (41) qui doit être installée sur l'unité de distribution (10) ; et
une partie d'évacuation de la pointe de distribution (50) pour évacuer la pointe de distribution (41) ; et
dans lequel la période de transfert inclut une période où l'unité de transfert (70) est déplacée depuis le haut de la partie d'évacuation de la pointe de distribution jusqu'en haut de la partie de stockage (42) de la pointe de distribution; et
le contrôleur est configuré pour surveiller si une pointe de distribution (41) est installée ou non sur l'unité de distribution (10) pendant cette période.

10. Analyseur selon la revendication 1 dans lequel le capteur de capacité (12d) est configuré pour comparer l'ampleur de la capacité détectée avec une capacité standard, et est configuré pour produire le résultat de comparaison ; et
le contrôleur (82) est configuré pour déterminer si une pointe de distribution (41) est installée ou non sur l'unité de distribution (10) en fonction du résultat de comparaison produit par le capteur de capacité (12d).

11. Analyseur selon la revendication 1 dans lequel le capteur de capacité (12d) est configuré pour produire un deuxième signal en fonction de la capacité; et
le contrôleur (82) est configuré pour déterminer si une quantité prédéterminée ou plus de liquide qui doit être aspiré par l'unité de distribution est présente ou non.

12. Analyseur selon la revendication 1, dans lequel le contrôleur (82) est configuré pour déterminer si une pointe de distribution (41) est installée ou non sur l'unité de distribution (10) pendant une période où l'unité de distribution (10) est déplacée par l'unité de transfert (70).

13. Procédé d'analyse comprenant :
une étape d'installation destinée à installer une pointe de distribution (41) sur une unité de distribution (10) pour distribuer un liquide ;
une étape de transfert destinée à déplacer l'unité de distribution (10) jusqu'à une position prédéterminée ;
une étape de surveillance destinée à surveiller si une pointe de distribution (41) est installée ou non sur l'unité de distribution (10) en fonction du signal produit depuis le capteur de capacité (12d) relié à l'unité de distribution (10) ; et
une étape de dégagement destinée à dégager la pointe des distributions (41) depuis l'unité de distribution (10) ;
dans lequel surveiller si la pointe de distribution (41) est installée ou non sur l'unité de distribution (10) est réalisé pendant la réalisation de l'étape de transfert.

14. Procédé d'analyse selon la revendication 13, dans lequel surveiller si une pointe de distribution (41) est installée ou non sur l'unité de distribution (10) est réalisé à des intervalles prédéterminés pendant la réalisation de l'étape de transfert.

15. Procédé d'analyse selon la revendication 13, dans lequel surveiller si la pointe de distribution (41) est installée ou non sur l'unité de distribution (10) est effectué en surveillant la capacité.

16. Procédé d'analyse selon la revendication 13 comprenant en outre :
une deuxième étape de transfert destinée à déplacer l'unité de distribution (10) en haut de la position d'installation pour installer la pointe de distribution (41) jusqu'à l'unité de distribution (10) après que l'étape de dégagement ait été réalisée ; et
dans lequel surveiller si la pointe distribution (41) est installée ou non sur l'unité de distribution (10) est réalisé pendant la réalisation de l'étape de transfert et pendant la réalisation de la deuxième étape de transfert.

17. Procédé d'analyse selon la revendication 16 comprenant en outre :
une étape de production d'erreur lorsqu'il est déterminé que la pointe distribution (41) est installée sur l'unité de distribution (10) par une surveillance réalisée pendant la réalisation de la deuxième étape de transfert.

18. Procédé d'analyse selon la revendication 15, dans lequel l'étape de surveillance comprend :
une étape d'obtention d'une capacité;
l'étape de comparaison de la capacité obtenue est une capacité standard ; et
une étape consistant à déterminer si une pointe de distribution (41) est installée ou non sur l'unité de distribution (10) en fonction des résultats de comparaison.

19. Procédé d'analyse selon la revendication 13 comprenant en outre :
une étape consistant à déterminer si une quantité prédéterminée ou plus de liquide qui doit être aspiré par l'unité de distribution (10) est présente ou non.
